# EUROPEAN PATENT SPECIFICATION

(11) **EP 3 699 453 B1**
(45) Date of publication and mention of the grant of the patent: **08.12.2021**
(21) Application number: 19206133.1
(22) Date of filing: 30.10.2019
(51) Int. Cl.: F16F 15/121

(54) **DAMPER DISC ASSEMBLY**
DÄMPFERPLATTENANORDNUNG
ENSEMBLE DISQUE D'AMORTISSEUR

(30) Priority: 16.01.2019 JP 2019004871
(43) Date of publication of application: 26.08.2020
(73) Proprietor: Exedy Corporation, Neyagawa-shi, Osaka 572-8570 (JP)
(72) Inventor: KAWAHARA, Yuki, Osaka, 572-8570 (JP)
(74) Representative: KASTEL Patentanwälte PartG mbB

(56) References cited:
- WO-A1-2015/162386
- DE-A1-102008 018 218

## Description

### BACKGROUND OF THE INVENTION

### 1. Field of the Invention

The present invention relates to a damper disc assembly.

### 2. Description of the Related Art

A damper disc assembly is provided in a power transmission path between a drive source, including an engine or an electric motor, and a wheel in a vehicle such as an automobile. In general, the damper disc assembly includes an input-side plate, to which a torque is inputted and that includes a clutch plate and a retaining plate, and a spline hub coupled to an input shaft of a transmission. The input-side plate and the spline hub are elastically coupled in a rotational direction by a plurality of torsion springs (e.g., Japan Laid-open Patent Application Publication No. 2006-336832). WO 2015/162386 A1 discloses a damper disc according to the preamble of claim 1.

Electric cars and hybrid vehicles use the electric motor as a drive source. The electric motor has a large amount of inertia. Because of this, when vibration is inputted thereto through an output shaft from a vibration source such as a vehicle body or the surface of road, for instance, there are chances of occurrence of resonance in which the moment of inertia of the electric motor is a principal moment of inertia.

In order to inhibit such resonance as described above, it is effective to provide a damper mechanism in the power transmission path. However, when the damper mechanism is provided therein, drivability is impaired because a drive force, outputted from the drive source, is transmitted to the wheel through the damper mechanism including a plurality of springs. Therefore, in order to maintain good drivability, it is desirable for a powertrain to have high stiffness.

As described above, there are antinomic demands as follows: it is preferred to provide a damper mechanism having moderate stiffness in order to inhibit excessive torque attributed to resonance; but it is preferred for the powertrain to have as high stiffness as possible in order to maintain good drivability.

### SUMMARY OF THE INVENTION

It is an object of the present invention to reduce an excessive torque attributed to vibration from a driven side, and besides, reliably maintain good drivability.

(1) A damper disc assembly according to the present invention includes an input-side plate, an output-side plate and a damper mechanism. The input-side plate is a member to which a torque outputted from a drive source is inputted. The output-side plate is provided on the input-side plate so as to be rotatable relatively thereto. The damper mechanism includes a plurality of elastic members that elastically couple the input-side plate and the output-side plate in a rotational direction. The damper mechanism prevents torsion between the input-side plate and the output-side plate in torque transmission from the input-side plate to the output-side plate, and allows the torsion with a predetermined torsional characteristic in torque transmission from the output-side plate to the input-side plate.

Here, in the damper mechanism, a drive-side torsional characteristic (a characteristic exerted in torque transmission from an input side to an output side) is rigid. In other words, when inputted to the input-side plate, a torque is directly transmitted to the output-side plate without torsion or displacement (relative rotation) between the input-side plate and the output-side plate. Therefore, good drivability is reliably maintained.

Contrarily, a driven-side torsional characteristic (a torsional characteristic exerted in torque transmission from the output side to the input side) is exerted as a predetermined torsional characteristic. In other words, a function intrinsic to the damper mechanism works. Therefore, by appropriately adjusting the stiffness (i.e., the torsional characteristic) of the damper mechanism, resonance attributed to vibration from a vibration source disposed on the driven side can be set outside a normal rotational speed range. Because of this, an excessive torque can be inhibited from being transmitted to the input side in a normal operating condition. Consequently, protection of the entirety of a drivetrain and compactness in size of components are enabled.

(2) Preferably, the plurality of elastic members receive preloads applied thereto while being attached in a preliminarily elastically deformed state.

For example, when a vehicle goes downhill (i.e., in an initial phase of reverse torque transmission from the driven side to the drive side), chances are that the damper mechanism is actuated by elastic deformation of the elastic members, whereby rattling sound is produced. In view of this, by applying preloads to the plurality of elastic members, the damper mechanism can be actuated only under action of the excessive torque. Because of this, production of noise such as rattling sound can be inhibited.

(3) Preferably, the damper mechanism includes a stopper mechanism. The stopper mechanism prevents the output-side plate from being rotated relative to the input-side plate in a first rotational direction in a neutral state, and allows the output-side plate to be rotated relative to the input-side plate in a second rotational direction in the neutral state.

Here, the stopper mechanism can set the drive-side torsional characteristic to be rigid, and can set the driven-side torsional characteristic to be appropriate.

(4) Preferably, the damper mechanism includes a hysteresis torque generating mechanism that generates a friction force directed in the rotational direction when the input-side plate and the output-side plate are rotated relative to each other.

Here, the driven-side torsional characteristic has a hysteresis torque. Hence, torque fluctuations can be effectively inhibited.

(5) Preferably, the drive source includes at least an electric motor.

Overall, according to the present invention described above, an excessive torque attributed to vibration from a driven side can be reduced. Hence, protection of the entirety of a drivetrain and compactness in size of components are enabled. Additionally, according to the present invention, good drivability can be reliably maintained.

### BRIEF DESCRIPTION OF THE DRAWINGS

FIG. 1 is a block diagram of a vehicle in which a damper disc assembly according to a preferred embodiment of the present invention is installed.
FIG. 2 is a cross-sectional configuration view of the damper disc assembly according to the preferred embodiment of the present invention.
FIG. 3 is a front view of the damper disc assembly.
FIG. 4 is a partial cross-sectional view of a first spacer.
FIG. 5 is a partial front view of the first spacer.
FIG. 6 is a partial cross-sectional view of a second space and a friction washer.
FIG. 7 is a torsional characteristic diagram of the damper disc assembly.

### DETAILED DESCRIPTION OF THE PREFERRED EMBODIMENTS

### [Entire Configuration]

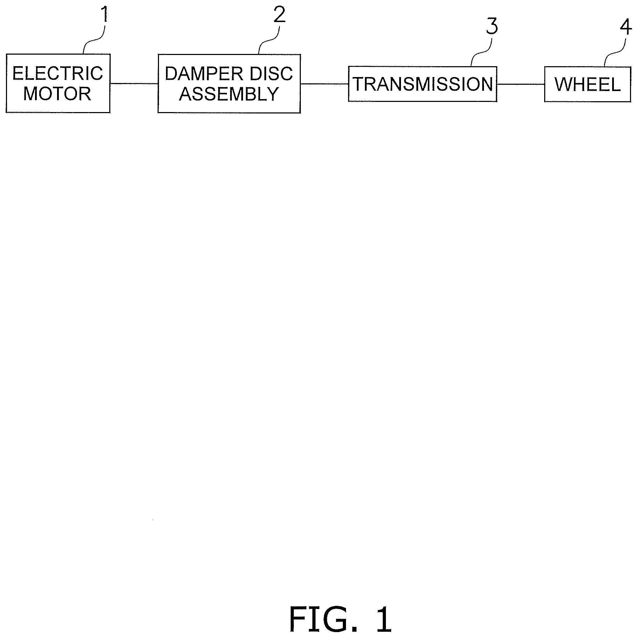

FIG. 1 is a block diagram of a vehicle in which a damper disc assembly according to a preferred embodiment of the present invention is installed. Here, a torque is transmitted from an electric motor 1 provided as a drive source to a transmission 3 through a damper disc assembly 2, and is then transmitted to a wheel 4.

### [Damper Disc Assembly 2]

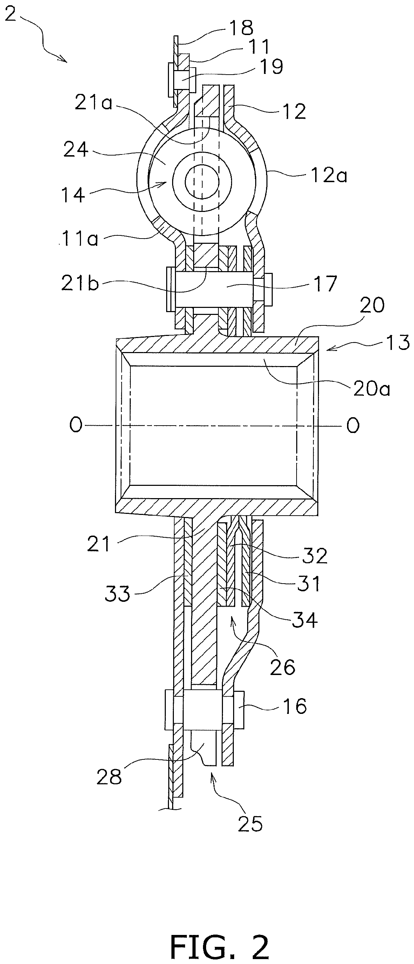

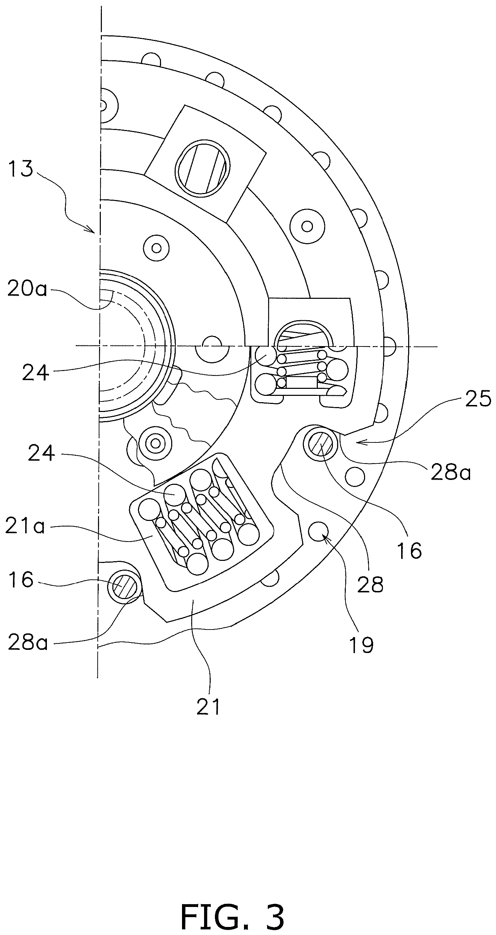

FIGS. 2 and 3 show the damper disc assembly 2 according to the preferred embodiment of the present invention. FIG. 2 is a cross-sectional configuration view of the damper disc assembly 2, whereas FIG. 3 is a front view thereof. In FIG. 2, line O-O indicates a rotational center line.

### [Entire Configuration]

In the drawings, the damper disc assembly 2 includes a clutch plate 11, a retaining plate 12 (the both plates 11 and 12 compose an exemplary input-side plate), a spline hub 13 (an exemplary output-side plate) and a damper mechanism 14.

### [Clutch Plate 11 and Retaining Plate 12]

The clutch plate 11 and the retaining plate 12, each having a disc shape, are disposed in axial opposition to each other through a predetermined gap. The clutch plate 11 and the retaining plate 12 are fixed at the outer peripheral parts thereof by stop pins 16, while being fixed at the inner peripheral parts thereof by stud pins 17. Because of this, the clutch plate 11 and the retaining plate 12 are non-rotatable relative to each other, and are axially immovable from each other. Additionally, the clutch plate 11 is capable of being coupled at the outer peripheral part thereof to an electric motor-side member 18 by rivets 19. Therefore, the torque is inputted to the clutch plate 11 and the retaining plate 12 from the electric motor-side member 18.

The clutch plate 11 and the retaining plate 12 are each provided with six spring support portions 11a, 12a. The spring support portions 11a and the spring support portions 12a are shaped to bulge (axially outward) so as to separate from each other.

### [Spline Hub 13]

The spline hub 13 includes a hub 20 and a flange 21. The spline hub 13 is basically rotatable relative to the clutch plate 11 and the retaining plate 12 (detailed explanation thereof will be described below). The hub 20 includes a spline hole 20a in the center part thereof. The spline hole 20a is capable of being meshed with a spline shaft provided on an input shaft of the transmission 3 (not shown in the drawings). The flange 21 is shaped to extend radially outward from an approximately axial middle part of the hub 20. The flange 21 has a disc shape, and is provided with six window holes 21a. The window holes 21a are provided at equal intervals in the outer peripheral part of the flange 21, and each extend in a circumferential direction. The window holes 21a are provided in corresponding positions to pairs of spring support portions 11a and 12a of the clutch plate 11 and the retaining plate 12. It should be noted that the flange 21 is provided with a plurality of elongated holes 21b, each of which is elongated in the circumferential direction, such that each stud pin 17 can be rotated within a predetermined angular range while penetrating each elongated hole 21b.

### [Damper Mechanism 14]

The damper mechanism 14 includes a plurality of torsion springs 24, a stopper mechanism 25 and a hysteresis torque generating mechanism 26.

The plural torsion springs 24 are accommodated in six triads of the window hole 21a and the spring support portions 11a and 12a, respectively. Each torsion spring 24 is accommodated therein in a preliminarily compressed state. In other words, a preload is applied to each torsion spring 24.

The stopper mechanism 25 is composed of stopper cutouts 28 and the aforementioned stop pins 16. Each stopper cutout 28 is provided on an outer peripheral region of a portion interposed between adjacent two of the window holes 21a in the outer peripheral part of the flange 21. Each stopper cutout 28 is opened radially outward. Additionally, each stop pin 16 passes through each stopper cutout 28. Here, in a neutral state without torque transmission, each stop pin 16 makes contact with one end surface 28a of each stopper cutout 28.

In the damper mechanism 14 configured as described above, torsion or displacement (relative rotation) is prevented between the spline hub 13 and both the clutch plate 11 and the retaining plate 12 by the stopper mechanism 25 in torque transmission from both the clutch plate 11 and the retaining plate 12 to the spline hub 13 (i.e., in drive torque transmission). Contrarily, torsion or displacement (relative rotation) is allowed between the spline hub 13 and both the clutch plate 11 and the retaining plate 12 with a predetermined torsional characteristic in torque transmission from the spline hub 13 to both the clutch plate 11 and the retaining plate 12 (i.e., in driven torque transmission).

The hysteresis torque generating mechanism 26 is disposed in inner peripheral parts of gaps produced axially between the flange 21 of the spline hub 13 and both the clutch plate 11 and the retaining plate 12. In more detail, as described above, the clutch plate 11 and the retaining plate 12 are coupled by the plural stud pins 17. The interval between the clutch plate 11 and the retaining plate 12 is restricted to a predetermined dimension by the stud pins 17, and the hysteresis torque generating mechanism 26 is disposed in the axial space produced between the both plates 11 and 12.

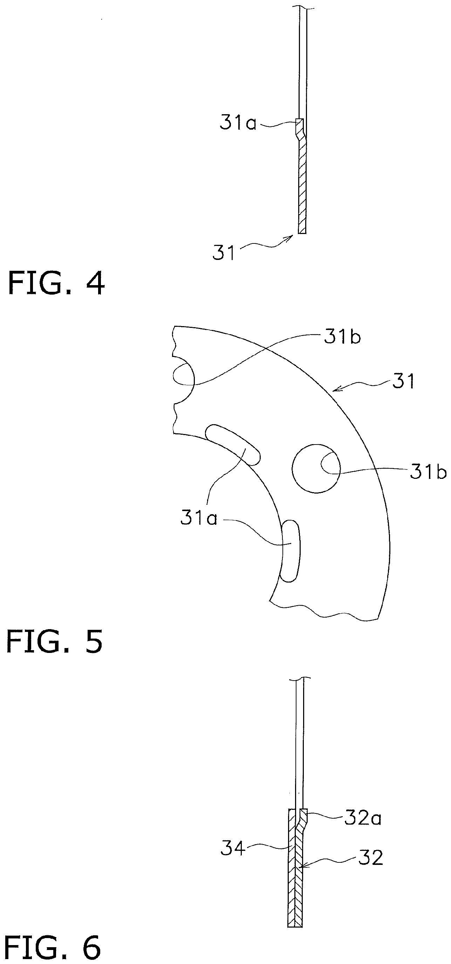

The hysteresis torque generating mechanism 26 includes a first spacer 31, a second spacer 32, and a friction washer 34 and a third spacer 33. Detailedly, the first spacer 31, the second spacer 32 and the friction washer 34, each of which has an annular shape, are disposed between the inner peripheral part of the retaining plate 12 and that of the flange 21, while being sequentially aligned in this order from the retaining plate 12 side. On the other hand, the third spacer 33 is disposed between the inner peripheral part of the clutch plate 11 and that of the flange 21. It should be noted that each of the members 31, 32, 33 and 34 is provided with a plurality of holes (see FIG. 5) that are penetrated by the stud pins 17, respectively. Accordingly, each of the members 31, 32, 33 and 34 is prevented from being freely rotated.

The first spacer 31 is a plate member having an annular shape, and is supported at the outer peripheral part thereof by the retaining plate 12. Additionally, as shown in FIGS. 4 and 5, the first spacer 31 is provided with a plurality of ribs 31a on the inner peripheral part thereof. The ribs 31a are provided thereon at predetermined intervals, and axially protrude therefrom to one side. The plural ribs 31a are provided in angular positions displaced from those in which a plurality of holes 31b penetrated by the stud pins 17 are provided. In other words, each rib 31a is provided in a position between adjacent two of the holes 31b.

Similarly to the first spacer 31, the second spacer 32 is a plate member having an annular shape. Additionally as shown in FIG. 6, the second spacer 32 is also provided with a plurality of ribs 32a on the inner peripheral part thereof. The ribs 32a are provided thereon at predetermined intervals, and axially protrude therefrom to one side. Similarly to each rib 31a of the first spacer 31, each rib 32a of the second spacer 32 is provided in a position between adjacent two of holes thereof (not shown in the drawings) penetrated by the stud pins 17. Moreover, as shown in FIG. 6, the second spacer 32 and the friction washer 34 are adhered to each other. It should be noted that the friction washer 34 is a resin molded component having an annular shape.

As is obvious from FIG. 2, the first spacer 31 and the second spacer 32 are disposed such that the ribs 31a of the first spacer 31 and the ribs 32a of the second spacer 32a make contact with each other, in other words, such that the ribs 31a of the first spacer 31 face the second spacer 32 while the ribs 32a of the second spacer 32 face the first spacer 31.

On the other hand, the third spacer 33 is different from the first spacer 31 only regarding the height of ribs, and hence is completely the same as the first spacer 31 regarding the other structural aspects.

In the structure described above, "T>S" is set where S is the axial space set by the stud pins 17; and T is total axial thickness of the members 31 to 34 composing the hysteresis torque generating mechanism 26, the flange 21, and the both input-side plates 11 and 12 in a free state. Therefore, while being assembled, the members 31 to 34, composing the hysteresis torque generating mechanism 26, are pressed in contact with each other by, for instance, elastic deformation of the ribs of the respective spacers 31 to 33.

### [Action]

### <Action in Torque Transmission from Electric Motor 1 Side>

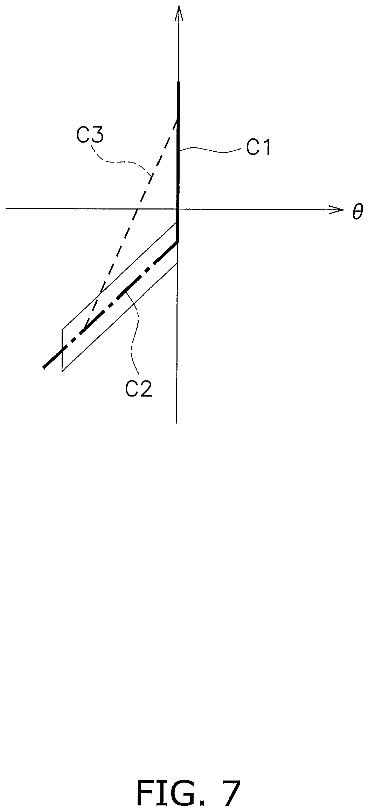

When inputted to the clutch plate 11 from the electric motor 1 side, a torque is directly inputted to the spline hub 13 through the stopper mechanism 25. In other words, torque transmission is made without through the plural torsion springs 24. Hence, a torsional characteristic herein exerted is made rigid as depicted with characteristic C1 in FIG. 7.

In more detail, in the neutral state, i.e., a state that a torque is not being inputted, each stop pin 16 makes contact with the end surface 28a of each stopper cutout 28. Therefore, in this neutral state, when inputted to both the clutch plate 11 and the retaining plate 12 from the electric motor 1 side, a positive-side torque (i.e., a torque for forward drive in a vehicle) is transmitted to the spline hub 13 in a path of "both the clutch plate 11 and the retaining plate 12 → the stop pins 16 → the stopper cutouts 28 (the end surfaces 28a thereof) → the spline hub 13" without through the torsion springs 24.

The torque transmitted from the drive side is herein transmitted to an output side through the damper disc assembly 2 having the rigid torsional characteristic. Therefore, good drivability is maintained. This enables, for instance, a quick response without delay to a request for a drive force by an accelerator operation.

### <Action in Torque Transmission from Wheel 4 Side>

When inputted from a driven side such as a wheel, a torque is transmitted to an input side through the damper mechanism 14. A torsional characteristic herein exerted is depicted with characteristic C2 in FIG. 7.

In more detail, in the neutral state, when inputted from the spline hub 13 side, a reverse torque is transmitted from the spline hub 13 to both the clutch plate 11 and the retaining plate 12 through the torsion springs 24. In other words, the torsion springs 24 are actuated, whereby torsion or displacement (relative rotation) is produced between the spline hub 13 and both the clutch plate 11 and the retaining plate 12. Besides, a hysteresis torque is generated by this torsion or displacement.

As described above, when the reverse torque is inputted from the driven side, the damper mechanism 14 is actuated with the torsional characteristic C2. Therefore, when a torque largely fluctuates between positive and negative values, a drive system functioning in driven-side torque input is configured to have a normal mode computed based on an equivalent stiffness depicted with broken line C3 in FIG. 7. Because of this, by appropriately adjusting and setting the equivalent stiffness, a resonance point attributed to vibration from a vibration source disposed on the driven side can be set in a desired range (outside a normal rotational speed range). Therefore, an excessive torque attributed to resonance can be inhibited, whereby protection of the entirety of a drivetrain and compactness in size of components are enabled.

### [Other Preferred Embodiments]

The present invention is not limited to the preferred embodiment described above, and a variety of changes or modifications can be made without departing from the scope of the present invention.
(a) In the aforementioned preferred embodiment, the damper disc assembly is disposed between the drive source and the transmission. However, the damper disc assembly may be provided inside the transmission, or alternatively, may be provided between the transmission and the wheel. Additionally, the present invention is similarly applicable to when a reducer is used without using the transmission as a system.
(b) The hysteresis torque generating mechanism, included in the damper mechanism, is not limited to have the configuration described in the aforementioned preferred embodiment, and can employ a variety of configurations.
(c) The aforementioned preferred embodiment has been explained by exemplifying the electric motor as the drive source. However, the present invention is similarly applicable as well to a hybrid vehicle that uses an engine in combination with an electric motor.

### REFERENCE SIGNS LIST

- 1: Electric motor (drive source)
- 2: Damper disc assembly
- 11: Clutch plate (input-side plate)
- 12: Retaining plate (input-side plate)
- 13: Spline hub (output-side plate)
- 14: Damper mechanism
- 24: Torsion spring
- 25: Stopper mechanism
- 26: Hysteresis torque generating mechanism

## Claims

1. A damper disc assembly (2) comprising:
an input-side plate (11, 12) to which a torque outputted from a drive source is inputted;
an output-side plate (13) provided on the input-side plate so as to be rotatable relatively thereto; and
a damper mechanism (14) including a plurality of elastic members (24),
the plurality of elastic members (24) elastically coupling the input-side plate (11, 12) and the output-side plate (13) in a rotational direction, the damper mechanism allowing the torsion with a predetermined torsional characteristic in torque transmission from the output-side plate (13) to the input-side plate (11, 12), **characterized in that** the damper mechanism (14) prevents torsion between the input-side plate (11, 12) and the output-side plate (13) in torque transmission from the input-side plate (11, 12) to the output-side plate (13).

2. The damper disc assembly according to claim 1, wherein the plurality of elastic members (24) receive preloads applied thereto while being attached in a preliminarily elastically deformed state.

3. The damper disc assembly according to claim 1 or 2, wherein the damper mechanism (14) includes a stopper mechanism (25), the stopper mechanism (25) preventing the output-side plate (13) from being rotated relative to the input-side plate (11, 12) in a first rotational direction in a neutral state, the stopper mechanism (25) allowing the output-side plate (13) to be rotated relative to the input-side plate (11, 12) in a second rotational direction in the neutral state.

4. The damper disc assembly according to any of claims 1 to 3, wherein the damper mechanism includes a hysteresis torque generating mechanism (26), the hysteresis torque generating mechanism (26) generating a friction force directed in the rotational direction when the input-side plate (11, 12) and the output-side plate (13) are rotated relative to each other.

5. The damper disc assembly according to any of claims 1 to 4, wherein the drive source includes at least an electric motor.

## Patentansprüche

1. Dämpferplattenanordnung (2), umfassend:
eine eingangsseitige Platte (11, 12), in die ein von einer Antriebsquelle abgegebenes Drehmoment eingeleitet wird;
eine ausgangsseitige Platte (13), die relativ zu der eingangsseitigen Platte drehbar an dieser vorgesehen ist; und
einen Dämpfermechanismus (14) mit einer Mehrzahl von elastischen Elementen (24), wobei die mehrzähligen elastischen Elemente (24) die eingangsseitige Platte (11, 12) und die ausgangsseitige Platte (13) in einer Drehrichtung elastisch verbinden, wobei der Dämpfermechanismus bei der Drehmomentübertragung von der ausgangsseitigen Platte (13) auf die eingangsseitige Platte (11, 12) die Torsion mit einer vorgegebenen Torsionscharakteristik erlaubt,
**dadurch gekennzeichnet,**
**dass** der Dämpfermechanismus (14) bei der Drehmomentübertragung von der eingangsseitigen Platte (11, 12) auf die ausgangsseitige Platte (13) eine Torsion zwischen der eingangsseitigen Platte (11, 12) und der ausgangsseitigen Platte (13) verhindert.

2. Dämpferplattenanordnung nach Anspruch 1, wobei die mehrzähligen elastischen Elemente (24) Vorspannungen erhalten, die auf sie ausgeübt werden, während sie in einem vorläufig elastisch verformten Zustand befestigt werden.

3. Dämpferplattenanordnung nach Anspruch 1 oder 2, wobei der Dämpfermechanismus (14) einen Anschlagmechanismus (25) aufweist, wobei der Anschlagmechanismus (25) in einem Neutralzustand eine Drehung der ausgangsseitigen Platte (13) relativ zu der eingangsseitigen Platte (11, 12) in einer ersten Drehrichtung verhindert und der Anschlagmechanismus (25) im Neutralzustand eine Drehung der ausgangsseitigen Platte (13) relativ zu der eingangsseitigen Platte (11, 12) in einer zweiten Drehrichtung zulässt.

4. Dämpferplattenanordnung nach einem der Ansprüche 1 bis 3, wobei der Dämpfermechanismus einen Hysteresedrehmoment-Erzeugungsmechanismus (26) umfasst und der Hysteresedrehmoment-Erzeugungsmechanismus (26) eine in Drehrichtung gerichtete Reibkraft erzeugt, wenn die eingangsseitige Platte (11, 12) und die ausgangsseitige Platte (13) relativ zueinander gedreht werden.

5. Dämpferplattenanordnung nach einem der Ansprüche 1 bis 4, wobei die Antriebsquelle zumindest einen Elektromotor umfasst.

## Revendications

1. Ensemble disque d'amortisseur (2), comprenant:
une plaque côté d'entrée (11, 12) dans laquelle un couple de sortie provenant d'une source d'entraînement est introduit; et
une plaque côté sortie (13) prévue sur la plaque côté d'entrée de manière rotative par rapport à celle-ci; et
un mécanisme amortisseur (14) ayant une pluralité d'éléments élastiques (24),
la pluralité d'éléments élastiques (24) reliant élastiquement la plaque côté entrée (11, 12) et la plaque côté sortie (13) dans une direction de rotation, le mécanisme amortisseur permettant une torsion avec une caractéristique de torsion prédéterminée lorsque le couple est transmis de la plaque côté sortie (13) à la plaque côté entrée (11, 12),
**caractérisé en ce que**
le mécanisme amortisseur (14) empêche une torsion entre la plaque côté entrée (11, 12) et la plaque côté sortie (13) pendant la transmission du couple de la plaque côté entrée (11, 12) à la plaque côté sortie (13).

2. Ensemble disque d'amortisseur selon la revendication 1, dans lequel ladite pluralité d'éléments élastiques (24) reçoive des sollicitations appliquées à ceux-ci tout en étant fixés dans un état déformé élastiquement préliminaire.

3. Ensemble disque d'amortisseur selon la revendication 1 ou 2, dans lequel ledit mécanisme d'amortisseur (14) comprend un mécanisme d'arrêt (25), ledit mécanisme d'arrêt (25) dans un état neutre empêchant la rotation de ladite plaque côté sortie (13) par rapport à ladite plaque côté d'entrée (11, 12) dans une première direction de rotation et ledit mécanisme d'arrêt (25) dans ledit état neutre permettant la rotation de ladite plaque côté sortie (13) par rapport à ladite plaque côté d'entrée (11, 12) dans une seconde direction de rotation.

4. Ensemble disque d'amortisseur selon l'une quelconque des revendications 1 à 3, dans lequel le mécanisme d'amortisseur comprend un mécanisme de génération de couple d'hystérésis (26), ledit mécanisme de génération de couple d'hystérésis (26) générant une force de friction dirigée en la direction de rotation lorsque la plaque côté d'entrée (11, 12) et la plaque côté sortie (13) sont tournées l'une par rapport à l'autre.

5. Ensemble disque d'amortisseur selon l'une quelconque des revendications 1 à 4, dans lequel la source d'entraînement comprend au moins un moteur électrique.
